Europäisches Patentamt

European Patent Office

Office européen des brevets

(19)

(11)  EP 1 027 634 B1

(12)  **EUROPÄISCHE PATENTSCHRIFT**

(45) Veröffentlichungstag und Bekanntmachung des Hinweises auf die Patenterteilung:
   **10.07.2002 Patentblatt 2002/28**

(21) Anmeldenummer: **98954476.2**

(22) Anmeldetag: **02.11.1998**

(51) Int Cl.⁷: **G05B 13/02**, F16H 61/06,
   G01D 3/02

(86) Internationale Anmeldenummer:
   **PCT/EP98/06928**

(87) Internationale Veröffentlichungsnummer:
   **WO 99/24879 (20.05.1999 Gazette 1999/20)**

(54) **STEUERVERFAHREN MIT EINER DURCH STÜTZPUNKTE DEFINIERTEN KENNLINIE**

CONTROL METHOD WITH A CHARACTERISTIC CURVE DEFINED BY INTERPOLATION POINTS

PROCEDE DE REGULATION AVEC UNE COURBE CARACTERISTIQUE DEFINIE PAR DES POINTS D'INTERPOLATION

(84) Benannte Vertragsstaaten:
   **DE FR GB**

(30) Priorität: **06.11.1997 DE 19749056**

(43) Veröffentlichungstag der Anmeldung:
   **16.08.2000 Patentblatt 2000/33**

(73) Patentinhaber: **ZF FRIEDRICHSHAFEN**
   **Aktiengesellschaft**
   **88038 Friedrichshafen (DE)**

(72) Erfinder:
• **DANZ, Wolfgang**
   **D-88046 Friedrichshafen (DE)**
• **FISCHER, Johannes**
   **D-88045 Friedrichshafen (DE)**

(56) Entgegenhaltungen:
   EP-A- 0 537 809          DE-A- 3 502 873
   DE-C- 4 016 018          DE-C- 19 603 091
   US-A- 4 213 175          US-A- 5 063 510

**Beschreibung**

Die Erfindung betrifft ein Steuerverfahren mit einer durch Stützpunkte definierten Kennlinie nach dem Oberbegriff von Anspruch 1.

Prozesse, denen starke zeitvariante Störungen überlagert sind, können allgemein nur unzureichend durch einen linearen Regleransatz geführt werden. Um die geforderte Regelgüte zu erreichen, sind in der Regel entsprechende, nicht lineare Regelkreisstrukturen anzusetzen und ein Modell für die Störgrößen einzubeziehen. Sie führen häufig zu instabilen Situationen. In der Praxis ist das Störgrößenmodell meist unbekannt und eine Ermittlung ist nur unter erheblichem Aufwand, häufig aber auch gar nicht möglich.

In solchen Fällen greift man auf eine gesteuerte Vorgabe der Stellgröße auf der Basis eines stationären, empirischen Prozeßmodells mit einer Kennlinie oder einem Kennfeld zurück, ohne zunächst die Störgrößen zu berücksichtigen. Das resultierende Führungsverhalten ist für den ungestörten Betriebsfall stationär genau und im dynamischen Übergang sehr schnell und trotzdem stabil. Im Falle, daß Störungen auftreten, entstehen stationär unvorhersehbar große oder weniger große Abweichungen zwischen der Regelund Führungsgröße. Es ist daher in jedem Fall abzusichern, daß keine kritischen Betriebszustände auftreten, z.B. indem die Stellgrößen beschränkt werden. Allerdings kann in diesem Fall der allgemeinen Forderung bezüglich stationärer Genauigkeit nicht mehr im ausreichendem Maße nachgekommen werden.

Für Kupplungen von Automatgetrieben sind Steuerungsverfahren bekanntgeworden, bei denen die Steuergröße durch Interpolation von Kennlinien und Kennfeldern berechnet wird. Um die Genauigkeit dieser Steuerverfahren hinsichtlich exemplarbedingter und alterungsbedingter Steuerungen zu verbessern, schlägt die US 5,063,510 A vor, eine Steuerkennlinie bzw. ein Steuerkennfeld adaptiv zu korrigieren, indem ein Korrekturwert für die Steuergröße mit linearer Abhängigkeit von Istwert zu Sollwert einer statischen Referenzgröße gebildet und interpolativ in die Steuerkennlinie bzw. das Steuerkennfeld übertragen wird.

Der Erfindung liegt die Aufgabe zugrunde, Prozesse, denen starke, zeitvariante Störungen überlagert sind, stabil und mit ausreichender Genauigkeit zu steuern. Sie wird erfindungsgemäß durch ein Steuerverfahren nach dem Anspruch 1 gelöst.

Nach der Erfindung wird ein Steuerverfahren mit einer durch Stützstellen definierten Kennlinie gewählt. Die Stützstellen können durch Versuche gewonnene Erfahrungswerte sein, sie können aber auch beliebig vorgegeben werden, da sie im Betrieb adaptiert werden, und zwar in Abhängigkeit der Regelabweichung einer Stellgröße und einem Verhältnis der Differenz zwischen einem Meßpunkt und einer Stützstelle und der Differenz zweier zur Meßstelle benachbarter Stützstellen.

Zweckmäßigerweise werden die zur Adaption benötigten Korrekturwerte für die benachbarten Stützstellen aus folgenden Beziehungen ermittelt

$$K_u = R_{abw.} * [1 - (x - x_u)/(x_o - x_u)]$$

und

$$K_o = R_{abw.} * [1 - (x_o - x)/(x_o - x_u)],$$

wobei $K_o$, $K_u$ die Korrekturwerte für die untere bzw. die obere Stützstelle, $x$ ein aktueller gemessener Betriebspunkt auf der Kennlinie und $x_o$, $x_u$ Werte einer nächstliegenden höheren bzw. niedrigeren Stützstelle bezogen auf den Meßwert sind. Die neue adaptierte Kennlinie ergibt sich aus den ursprünglichen Stützstellen plus den zugehörigen Korrekturwerten.

Um die Stabilität des Verfahrens zu erhöhen und die Recheneinheit wenig zu belasten, ist es zweckmäßig, die Adaption mit einer Abtastzeit größer 20 Millisekunden durchzuführen. Gegebenenfalls muß die Abtastzeit an die dominante Prozeßzeitkonstante angepaßt werden. Ferner ist es vorteilhaft, den Adaptionsbereich der Kennlinie auf einen Bereich der Kennlinie zu begrenzen, in dem ein zugehöriger Sensor linear arbeitet. Dies ist bei einer Steuerung einfacher als bei einer Regelung.

Nach einer weiteren Ausgestaltung der Erfindung werden die neuen Stützstellenwerte in Schritten vorgegeben. Dadurch werden zu große Sprünge während des Betriebs vermieden und die Ausgangsgröße der Steuerung verläuft weniger hektisch.

Aus dem Korrekturwert lassen sich Rückschlüsse auf das Betriebsverhalten schließen. Somit können die Korrekturwerte zu Diagnosezwecke verwendet werden, wenn sie z.B. vorgegebene Grenzwerte überschreiten. Andererseits können definierte Sollwerte vorgegeben werden, um die Reaktion des Systems zu überprüfen.

Das erfindungsgemäße Steuerverfahren eignet sich besonders zur Drucksteuerung eines Automatgetriebes, insbesondere eines mit kontinuierlich variabler Übersetzung. Hierbei ist die hydraulische Einstellung der Haftreibungskraft zwischen zwei Reibelementen, z.B. einem Umschichtungsband und Kegelscheiben, von zahlreichen zeitvarianten Störungen überlagert. Dynamisch sowie stationär muß über die Anpressung der Kegelscheiben sichergestellt werden, daß das Band, z.B. ein Schubgliederband, auf keinen Fall über den Kegelscheiben durchrutscht. Die Kegelscheiben und vor allem das Band würden dadurch zerstört. Die Anpreßkraft, die durch einen hydraulischen Druck erzeugt wird, beeinflußt zudem maßgeblich den Wirkungsgrad des Getriebes und damit direkt den Kraftstoffverbrauch des angetriebenen Kraftfahrzeugs. Bei der Steuerung des Anpreßdrucks liegt daher ein verstärkter Schwerpunkt darauf, daß die stationäre Genauigkeit eingehalten wird. Das erfindungsgemäße Steuerverfahren erfüllt die Forderungen sowohl in bezug auf die Stabilität der Steuerung als auch in Bezug auf die Genauigkeit.

Wenn der Korrekturwert Anlaß gibt, auf einen Fehler im System zu schließen, z.B. wenn er einen vorgegebenen Grenzwert überschreitet, ist es zweckmäßig, eine Ersatzfunktion des Getriebes zu aktivieren, z. B. ein Notlaufprogramm. Ferner ist es vorteilhaft, die Daten beim Abschalten der Stromversorgung, z.B. wenn die Zündung einer Brennkraftmaschine ausgeschaltet wird oder die Stromversorgung ausfällt, in einem Speicherbaustein (z.B. EEPROM, FLASH) abzulegen, damit sie beim Neustart wieder zur Verfügung stehen. Wird beim Neustart die zuletzt adaptierte Kennlinie benutzt, erreicht man eine Langzeitanpassung der Kennlinie während der Lebensdauer.

Das erfindungsgemäße Steuerverfahren kann nicht nur mit Kennlinien angewendet werden, sondern in gleicher Weise mit n-dimensionalen Kennfeldern. Hierbei werden die Korrekturwerte der Stützstellen für jede Dimension einzeln ermittelt.

Weitere Vorteile ergeben sich aus der folgenden Zeichnungsbeschreibung. In der Zeichnung sind Diagramme mit beispielhaften Kennlinien zur Erläuterung der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    ein Diagramm, in dem über einem Solldruck die zugehörige Stromstärke eines Magnetventils aufgetragen ist und

Fig. 2    ein gleiches Diagramm mit einer adaptierten Kennlinie.

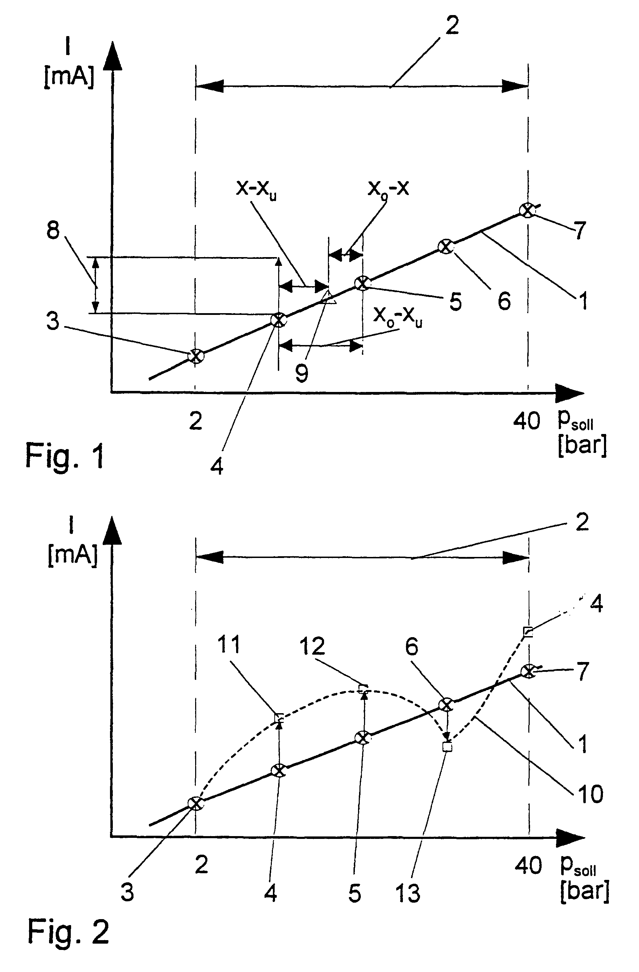

In dem Diagramm nach Fig. 1 ist eine Kennlinie 1 eingezeichnet, die durch Stützstellen 3-7 definiert ist. Sie stellt die Beziehung eines Solldrucks gemessen in bar zu einer Stromstärke eines Magnetventils gemessen in mA dar, wie sie bei Automatgetrieben mit kontinuierlich variabler Übersetzung für Kraftfahrzeuge anwendbar ist. Die Stützstellen 3-7 können Erfahrenswerten (Meßwerten) entsprechen oder zunächst beliebig angenommen werden. Sie werden in einer elektronischen Recheneinheit abgelegt. Ein ausgewählter Adaptionsbereich 2 umfaßt die Druckwerte 2 bar bis 40 bar, der mit dem Arbeitsbereich eines Drucksensors identisch ist.

Aus einem gemessenen Druckwert $p_{ist}$ wird die Regelabweichung $p_{abw.} = (p_{soll} - p_{ist})$ ermittelt. Aus der Lage der Meßstelle 9 auf der Kennlinie 1 relativ zu den benachbarten Stützstellen 4 und 5 werden Korrekturwerte 8 ermittelt und die benachbarten Stützstellen 4 bzw. 5 entsprechend den berechneten Korrekturwerten 8 adaptiert.

Aus den adaptierten Stützstellen ergibt sich eine adaptierte Kennlinie 10 (Fig. 2) mit adaptierten Stützstellen 11, 12, 13, 14, die der weiteren Steuerung zugrunde liegen und den Bezugspunkt für die nächste Adaption bilden.

Die zuletzt adaptierte Kennlinie wird bei Beendigung des Betriebs des Kraftfahrzeugs gespeichert und beim Neustart als Ausgangskennlinie verwendet.

Bezugszeichen

| | |
|---|---|
| 1 | Kennlinie |
| 2 | Adaptionsbereich |
| 3 | Stützstelle |
| 4 | Stützstelle |
| 5 | Stützstelle |
| 6 | Stützstelle |
| 7 | Stützstelle |
| 8 | Korrekturwert |
| 9 | Meßpunkt |
| 10 | adaptierte Kennlinie |
| 11 | adaptierte Stützstelle |
| 12 | adaptierte Stützstelle |
| 13 | adaptierte Stüztstelle |
| 14 | adaptierte Stützstelle |

**Patentansprüche**

1. Steuerverfahren mit einer durch Stützstellen (3, 4, 5, 6, 7) definierten, adaptierbaren Kennlinie (1), die in einer elektronischen Recheneinheit abgelegt ist, **dadurch gekennzeichnet, daß** eine Kennlinie (1) vorgegeben wird, die in Abhängigkeit einer Regelabweichung einer Stellgröße und in Abhängigkeit von einem Verhältnis der Differenz zwischen einem Meßpunkt (9) und einer benachbarten Stützstelle (4, 5) und der Differenz zwischen den zwei zum Meßpunkt (9) benachbarten Stützstellen (4, 5) adaptiert wird.

2. Steuerverfahren nach Anspruch 1, **dadurch gekennzeichnet, daß** die einem Meßpunkt (9) benachbarten Stützstellen (4, 5) mit einem Korrekturwert (8) aus folgenden Beziehungen

$$K_u = R_{abw.} * [1 - (x - x_u) / (x_o - x_u)]$$

und

$$K_o = R_{abw.} * [1 - (x_o - x)/(x_o - x_u)],$$

adaptiert werden, wobei $K_o$, $K_u$ die Korrekturwerte (8) für die untere bzw. die obere Stützstelle (4, 5), x ein aktueller Meßpunkt (9) auf der Kennlinie (1) und $x_o$, $x_u$ Werte einer nächstliegenden höheren bzw. niedrigeren Stützstelle (4, 5), bezogen auf den Meßpunkt (9), sind.

**3.** Steuerverfahren nach Anspruch 1 nach einem der vorhergehenden Ansprüche, **dadurch gekennzeichnet, daß** die Adaption mit einer Abtastrate größer 20 Millisekunden erfolgt.

**4.** Steuerverfahren nach einem der vorhergehenden Ansprüche, **dadurch gekennzeichnet, daß** der Adaptionsbereich (2) der Kennlinie (1) auf einen Bereich der Kennlinie (1) begrenzt ist, der dem Arbeitsbereich eines zugehörigen Meßsensors entspricht.

**5.** Steuerverfahren nach einem der vorhergehenden Ansprüche, **dadurch gekennzeichnet, daß** der neue Stützstellenwert (11, 12, 13, 14) in Schritten vorgegeben wird.

**6.** Steuerverfahren nach einem der vorhergehenden Ansprüche, **dadurch gekennzeichnet, daß** der Korrekturwert (8) zu Diagnosezwecken verwendet wird, wenn er einen vorgegebenen Grenzwert überschreitet.

**7.** Steuerverfahren nach Anspruch 6, **dadurch gekennzeichnet, daß** definierte Sollwerte vorgeben werden, um die Reaktion des Systems zu überprüfen.

**8.** Steuerverfahren nach einem der vorhergehenden Ansprüche, **dadurch gekennzeichnet, daß** es zur Drucksteuerung eines Automatgetriebes, insbesondere eines mit kontinuierlich variabler Übersetzung verwendet wird.

**9.** Steuerverfahren nach Anspruch 8, **dadurch gekennzeichnet, daß** eine Ersatzfunktion aktiviert wird, wenn der Korrekturwert (8) einen vorgegebenen Grenzwert überschreitet.

**10.** Steuerverfahren nach einem der vorhergehenden Ansprüche, **dadurch gekennzeichnet, daß** die zuletzt adaptierte Kennlinie (10) beim Beenden des Steuerverfahrens gespeichert und beim Neustart als Initialisierungswert verwendet wird.

**11.** Steuerverfahren nach Anspruch 10, **dadurch gekennzeichnet, daß** die Daten beim Abschalten der Stromversorgung in einem Speicherbaustein abgelegt werden.

**12.** Steuerverfahren nach einem der vorhergehenden Ansprüche, **dadurch gekennzeichnet, daß** anstelle eine Kennlinie (1, 10) n-dimensionale Kennfelder verwendet und die Korrekturwerte (8) für jede Dimension ermittelt werden.

## Claims

**1.** Control method with an adaptable characteristic curve (1) which is defined by interpolation points (3, 4, 5, 6, 7) and is stored in an electronic computing unit, **characterised in that** a characteristic curve (1) is predetermined which is adapted in accordance with a system deviation of a control variable and in accordance with a ratio of the difference between a measurement point (9) and an adjacent interpolation point (4, 5) and the difference between the two interpolation points (4, 5) adjacent to the measurement point (9).

**2.** Control method according to Claim 1, **characterised in that** the interpolation points (4, 5) which are adjacent to a measurement point (9) are adapted with a correction value (8) from the following relations

$$K_u = R_{abw.} * [1 - (x - x_u) / (x_o - x_u)]$$

and

$$K_o = R_{abw.} * [1 - (x_o - x) / (x_o - x_u)],$$

where $K_o$, $K_u$ are the correction values (8) for the lower and the upper interpolation point (4, 5), respectively, x is an actual measurement point (9) on the characteristic curve (1) and $x_o$, $x_u$ are values of a next higher or lower interpolation point (4, 5), respectively, related to the measurement point (9).

**3.** Control method according to Claim 1 according to any one of the preceding Claims, **characterised in that** the adaptation takes place at a sampling rate exceeding 20 milliseconds.

**4.** Control method according to any one of the preceding Claims, **characterised in that** the adaptation range (2) of the characteristic curve (1) is limited to a range of the characteristic curve (1) which corresponds to the working range of an associated measuring sensor.

**5.** Control method according to any one of the preceding Claims, **characterised in that** the new interpolation point value (11, 12, 13, 14) is predetermined in steps.

**6.** Control method according to any one of the preceding Claims, **characterised in that** the correction value (8) is used for diagnostic purposes if it exceeds a predetermined limit value.

**7.** Control method according to Claim 6, **characterised in that** defined desired values are predetermined in order to check the reaction of the system.

**8.** Control method according to any one of the preceding Claims, **characterised in that** it is used to control the pressure in an automatic transmission, in particular an automatic transmission with a continuously variable transmission ratio.

**9.** Control method according to Claim 8, **characterised in that** a stand-by function is activated if the correction value (8) exceeds a predetermined limit value.

**10.** Control method according to any one of the preceding Claims, **characterised in that** the last adapted characteristic curve (10) is stored upon completing the control method and used as an initialization value when restarting.

**11.** Control method according to Claim 10, **characterised in that** the data are stored in a memory module when the power supply is turned off.

**12.** Control method according to any one of the preceding Claims, **characterised in that** n-dimensional characteristic diagrams are used and the correction values (8) are established for each dimension.

**Revendications**

**1.** Procédé de commande comportant une ligne caractéristique (1) adaptable, définie par des zones d'appui (3, 4, 5, 6, 7), qui est enregistrée dans une unité de calcul électronique, **caractérisé en ce qu'**il est prévu une ligne caractéristique prédéterminée (1) qui est adaptée en fonction d'un écart de régulation d'une grandeur de réglage et en fonction d'un rapport liant la différence entre un point de mesure (9) et une zone d'appui voisine (4, 5) à la différence entre les deux zones d'appui (4, 5) adjacentes au point de mesure (9).

**2.** Procédé de commande selon la revendication 1, **caractérisé en ce que** les zones d'appui (4, 5) adjacentes à un point de mesure (9) sont adaptées à l'aide d'une valeur de correction (8) tirée des deux équations suivantes

$$K_u = R_{abw} * [1 - (x - x_u) / (x_o - x_u)]$$

et

$$K_o = R_{abw} * [1 - (x_o - x) / (x_o - x_u)],$$

où $K_o$, $K_u$ sont respectivement les valeurs de correction (8) pour les zones d'appui inférieure et supérieure (4, 5), $\underline{x}$ est un point de mesure actuel (9) de la ligne caractéristique (1) et $x_o$, $x_u$ sont respectivement des valeurs de zone d'appui, rapportées au point de mesure (9), immédiatement supérieure et inférieure (4, 5).

**3.** Procédé de commande selon la revendication 1 et selon l'une des revendications précédentes, **caractérisé en ce que** l'adaptation s'effectue avec une période d'analyse de plus de 20 millisecondes.

**4.** Procédé de commande selon l'une des revendications précédentes, **caractérisé en ce que** la plage d'adaptation (2) de la ligne caractéristique (1) est limitée à une plage de la ligne caractéristique (1) qui correspond à la plage de travail d'un capteur de mesure correspondant.

**5.** Procédé de commande selon l'une des revendications précédentes, **caractérisé en ce que** la nouvelle valeur de zone d'appui (11, 12, 13, 14) est prédéterminée par pas.

**6.** Procédé de commande selon l'une des revendications précédentes, **caractérisé en ce que** la valeur de correction (8) est utilisée pour des besoins de diagnostic lorsqu'elle devient supérieure à une valeur limite prédéterminée.

**7.** Procédé de commande selon la revendication 6, **caractérisé en ce que** des valeurs de consigne définies sont prédéterminées pour contrôler la réaction du système.

**8.** Procédé de commande selon l'une des revendications précédentes, **caractérisé en ce qu'**il est utilisé pour la commande de la pression d'une transmission automatique, en particulier d'une transmission à rapport continuellement variable.

**9.** Procédé de commande selon la revendication 8, **caractérisé en ce qu'**une fonction de remplacement est activée lorsque la valeur de correction (8) devient supérieure à une valeur limite prédéterminée.

**10.** Procédé de commande selon l'une des revendications précédentes, **caractérisé en ce que** la ligne caractéristique (10) adaptée en dernier lieu est mémorisée à l'achèvement du processus de commande et utilisée comme valeur d'initialisation lors du redémarrage.

**11.** Procédé de commande selon la revendication 10, **caractérisé en ce que** les données présentes au moment de la coupure de l'alimentation en courant sont enregistrées dans un élément de mémoire.

**12.** Procédé de commande selon l'une des revendications précédentes, **caractérisé en ce que**, en remplacement d'une ligne caractéristique (1, 10), on utilise des diagrammes caractéristiques à $n$ dimensions et les valeurs de correction (8) sont calculées pour chaque dimension.

Fig. 1

Fig. 2